(19) Europäisches Patentamt
European Patent Office
Office européen des brevets

(11) **EP 1 149 858 B2**

(12) **NEUE EUROPÄISCHE PATENTSCHRIFT**

(45) Veröffentlichungstag und Bekanntmachung des Hinweises auf die Entscheidung über den Einspruch:
**29.08.2007 Patentblatt 2007/35**

(45) Hinweis auf die Patenterteilung:
**04.02.2004 Patentblatt 2004/06**

(21) Anmeldenummer: **01106354.2**

(22) Anmeldetag: **16.03.2001**

(51) Int Cl.:
*C08J 7/18* (2006.01)       *B29C 71/04* (2006.01)
*B32B 3/26* (2006.01)       *B32B 3/28* (2006.01)
*B32B 3/30* (2006.01)

(54) **Verfahren zur Herstellung von genarbten Polyolefinfolien und deren Verwendung**

Process for preparing grained polyolefin films and their use

Procédé de fabrication de films grainés de polyoléfines et leur utilisation

(84) Benannte Vertragsstaaten:
**AT BE CH CY DE DK ES FI FR GB GR IE IT LI LU MC NL PT SE TR**

(30) Priorität: **12.04.2000 DE 10018196**

(43) Veröffentlichungstag der Anmeldung:
**31.10.2001 Patentblatt 2001/44**

(73) Patentinhaber: **Benecke-Kaliko AG**
**30007 Hannover (DE)**

(72) Erfinder:
 • **Ohlinger, Rainer, Dr.**
  **30519 Hannover (DE)**
 • **Schäfer, Burkhard, Dr.**
  **30655 Hannover (DE)**
 • **Bühring, Jürgen, Dr.**
  **30938 Burgwedel (DE)**

(74) Vertreter: **Finger, Karsten et al**
**Continental Aktiengesellschaft,**
**Vahrenwalder Str. 9**
**30165 Hannover (DE)**

(56) Entgegenhaltungen:
EP-A- 0 613 772       WO-A-00/18994
WO-A-98/42453        DE-A1- 3 728 774
DE-A1- 3 927 052      DE-A1- 4 007 876
DE-A1- 19 743 058     DE-C1- 3 528 810

• PATENT ABSTRACTS OF JAPAN vol. 016, no. 436 (P-1419), 11. September 1992 (1992-09-11) & JP 04 151188 A (TOPPAN PRINTING CO LTD), 25. Mai 1992 (1992-05-25)
• PATENT ABSTRACTS OF JAPAN vol. 016, no. 335 (M-1283), 21. Juli 1992 (1992-07-21) & JP 04 097844 A (TONEN CHEM CORP), 30. März 1992 (1992-03-30)
• PATENT ABSTRACTS OF JAPAN vol. 011, no. 385 (M-651), 16. Dezember 1987 (1987-12-16) & JP 62 152731 A (TORAY IND INC), 7. Juli 1987 (1987-07-07)
• PATENT ABSTRACTS OF JAPAN vol. 1999, no. 05, 31. Mai 1999 (1999-05-31) & JP 11 049866 A (TOKUYAMA CORP), 23. Februar 1999 (1999-02-23)
• Carlowitz, Dr.-Ing. Bodo, Kunststoff-Tabellen, 4. Auflage, 1995, S. 466-467
• Gächter & Müller, Taschenbuch der Kunststoff-Additive, Stabilisatoren, Hilfsstoffe, Weichmacher, Füllstoffe, Verstärkungsmittel, Farbmittel für thermoplastische Kunststoffe, 3. Ausgabe, 1989, S. 882-885

EP 1 149 858 B2

**Beschreibung**

Die Erfindung betrifft ein Verfahren zur Herstellung eines genarbten Formkörpers mit einem Gehalt an partiell vernetzten Polyolefin und gegebenenfalls weiteren Additiven sowie einen tiefgezogenen genarbten Formkörper, hergestellt nach diesem Verfahren.

Polyolefinfolien werden heute in den verschiedensten Wirtschaftsbereichen verwendet. Besonders wichtig ist ihre Verwendung als Verpackungsmaterial, als Abdeckfolie oder in Kombination mit anderen Flächengebilden als Verbundgebilde. Ein weiteres Verwendungsgebiet ist ihre Weiterverarbeitung zu Formkörpern, beispielsweise durch Tiefziehverfahren. Oftmals sollen die Polyolefinfolien bzw. die daraus hergestellten Verbundgebilde und Formkörper auch ästhetische Funktionen erfüllen. Die genannten Verwendungsgebiete erfordern von den Polyolefinfolien ein besonderes Eigenschaftsspektrum, wobei diese, insbesondere im Zusammenhang mit der Weiterverarbeitung im Tiefziehverfahren, bei hoher mechanischer Festigkeit und Alterungsbeständigkeit prägbar und laminierbar sein und eine gute Narbstabilität aufweisen sollen.

Die Polyolefinfolie mit den genannten Eigenschaften wird nach dem gegenwärtigen Stand der Technik durch den Einsatz partiell vernetzter polyolefinischer Rohstoffe in Abmischung mit anderen thermoplastischen Polyolefinen hergestellt. Die partiell vernetzten Rohstoffe sind als Reaktorprodukte nicht erhältlich. Es ist daher zu ihrer Herstellung notwendig, einen weiteren Umsetzungsschritt nach der Polymerisation durchzuführen. Diese zusätzliche Umsetzung hebt den Preis für diese Produkte deutlich über das Preisniveau von polyolefinischen Commodities. Ein weiterer Nachteil des bisher angewendeten Verfahrens besteht darin, daß die aus der Mischung partiell vernetzter polyolefinischer Rohstoffe mit anderen thermoplastischen Polyolefinen hergestellte Polyolefinfolie nach Ausbildung der Folien bezüglich ihres Vernetzungsgrades und somit bezüglich ihrer Eigenschaften festgelegt ist. Eine aus einer bestimmten Mischung hergestellte Folie ist daher nur für ein bestimmtes Spektrum an Verwendungen geeignet.

Die Behandlung polyolefinhaltiger Flächengebilde durch Elektronenstrahlen zum Zwecke der Modifizierung mechanischer Eigenschaften ist aus dem Stand der Technik bekannt. So beschreibt die EP-A-0 425 695 einen elektronenstrahlvernetzten bahnförmigen Schaum, der durch ein Verfahren erhalten wurde, das ein Elektronenstrahlhärten eines Gemisches aus polyolefinhaltigen Homo- und Copolymeren und einem Treibmittel und das anschließende Schäumen durch thermische Behandlung umfaßt. Hierbei besteht der technische Zweck der Elektronenstrahlbehandlung darin, das Entweichen des bei der thermischen Zersetzung des Treibmittels entstehenden Gases durch Vernetzung der Polymere an der Oberfläche des Schaums zu verhindern. Der gebildete Schaum weist eine Dichte von 0,05 bis 0,1 $g/cm^3$ auf. Das nachfolgend beschriebene erfindungsgemäße Verfahren schließt Schäumungsbedingungen aus.

Der Erfindung liegt die Aufgabe zugrunde, ein Verfahren zur Herstellung von genarbten Formkörpern bereit zu stellen, welche durch einen Tiefziehprozess erhalten werden und gute Narbstabilität aufweisen.

Erfindungsgemäß wird diese Aufgabe dadurch gelöst, dass aus unvernetzten Polyolefinen mit beigemischten Stabilisatoren und gegebenenfalls weiteren Additiven eine Folie hergestellt, diese Folie geprägt und die geprägte Folie zum Erzielen einer im Tiefziehprozess geeigneten Narbstabilität mit Elektronenstrahlen einer Strahlendosis von 30 bis 300 $kJ/m^2$ behandelt und die Strahlenbehandlung der geprägten Folie in einem solchen Ausmaß durchgeführt wird, dass sich in der bestrahlten, geprägten Folie ein Gelgehalt von 15 bis 65 Gew.-% einstellt, und die bestrahlte, geprägte Folie einer Dichte von 0,7 bis 1,2 $g/cm^3$ zu einem Formkörper mit genarbter Oberfläche tiefgezogen wird.

Ferner stellt sich die Lösung obiger Aufgabe dar in einem tiefgezogenen genarbten Formkörper auf der Basis eines vernetzten Polyolefins mit beigemischten Stabilisatoren und gegebenenfalls weiteren Additiven und mit einer Dichte von 0,7 bis 1,2 $g/cm^3$, mit einem Gelgehalt von 15 bis 65 Gew.-%, mit guter Narbstabilität sowie mit matter Oberfläche, erhalten nach einem Verfahren gemäß mindestens einem der Ansprüche 1 bis 9.

Durch eine gezielte Behandlung mit Elektronenstrahlen tritt dabei eine entsprechende Vernetzung des vorher unvernetzten Polyolefins ein.

Das Spektrum der dabei eingesetzten unvernetzten Polyolefine unterliegt keiner prinzipiellen Einschränkung. Vorzugsweise werden als unvernetzte Polyolefine verwendet: Polyolefine wie PP, PE, Poly(1-buten), Polyisobutylen, Poly(4-methylpenten), PP-Copolymere oder -Terpolymere mit $C_2$, $C_4$-$C_{12}$-$\alpha$-Olefinen, PE-Copolymere oder -Terpolymere mit $C_3$ bis $C_{12}$-$\alpha$-Olefinen oder Mischungen daraus, wobei als Co- oder Termonomer auch Dien-Monomere eingesetzt werden können, die nicht-konjugierte Doppelbindungen enthalten, wie z.B. 1,4-Hexadien, 5-Methyl-1,5-Hexadien, 5-Ethyliden-2-Norbonen, 5-Butyliden-2-Norbonen, Dicyclopentadien, 1,4-Octadien, Cyclohexadien oder Cyclooctadien; Copolymere von Propylen und/oder Ethylen mit polaren Comonomeren wie Acrylsäure und/oder deren $C_1$-$C_{12}$-Estern, Methyacrylsäure und/oder deren $C_1$-$C_{12}$-Estern, Vinylestern gesättigter $C_2$-$C_8$-Carbonsäuren, wahlweise mit Kohlenmonoxid als Termonomer; Pfropfcopolymere von Propylen und/oder Ethylen mit 8-45% aufgepfropften Einheiten von ungesättigten Carbonsäuren, Dicarbonsäuren, deren Estern und/oder Anhydriden sowie Gemische der genannten Polymere. Besonders bevorzugt werden Polypropylen, Polyethylen, Polypropylen-Copolymere oder -Terpolymere mit $C_2$, $C_4$-$C_{12}$-$\alpha$-Olefinen und/oder Polyethylen-Copolymere oder -Terpolymere mit $C_3$-$C_{12}$-$\alpha$-Olefinen verwendet.

Vorzugsweise sind die Polyolefine vor der Vernetzung durch einen Schmelzflußindex MFI (230°C, 2,16 kg) von 0,1 bis 800 g/10 min, insbesondere 0,1 bis 200 g/10 min, besonders bevorzugt 0,1 bis 20 g/10 min charakterisiert.

Neben den unvernetzten Polyolefinen kann die zur Ausbildung der Folie eingesetzte Masse auch noch weitere Polymer-Bestandteile enthalten. So kann auch ein Anteil an vorvernetzten Polymeren vorliegen, wobei dieser Anteil so angesetzt werden soll, daß die vorstehend formulierte Aufgabe in hinlänglichem Umfang erfüllt wird, so beispielsweise auch der angestrebte Preisvorteil erzielt wird. Vorzugsweise werden diese vorvernetzten Polymeren in einer Menge eingesetzt, die kleiner als 10%, vorzugsweise kleiner als 5% und insbesondere kleiner als 3% ist.

Neben den Polymer-Bestandteilen enthält die zur Folienherstellung eingesetzte Masse vorzugsweise eine Reihe von Hilfsmitteln, wie Vernetzungshilfsmittel, Antioxidationsmittel, Lichtschutzmittel und/oder Alterungsschutzmittel. Um z.B. einen ausreichenden Vernetzungsgrad bei der späteren Bestrahlung mit Elektronen zu erzielen, wird vorzugsweise ein Vernetzungshilfsmittel zugesetzt. Dies gilt insbesondere für Polyolefine, bei denen die Kettenspaltung, die als Konkurrenzreaktion zur Vernetzung abläuft, eine merkliche Auswirkung zeigt. Betroffen sind insbesondere Polyolefine mit tertiären und quartären C-Atomen. Verwendung als Vernetzungshilfsmittel finden insbesondere ein- oder mehrfach ungesättigte Verbindungen, wie Acrylate von 1- oder mehrwertigen Alkoholen, so z.B. Trimethylolpropantriacrylat, Methacrylate von 1- oder mehrwertigen Alkoholen, so z.B. Trimethylolpropantrimethacrylat, vinylfunktionelle Komponenten, wie Styrol und Divinylbenzol, Allyl-Verbindungen, wie Triallylcyanurat, Triallylisocyanat, Schwefel, p-Chinondioxim, p,p'-Dibenzoylchinondioxim, N-Methyl-N,4-dinitrosoanilin, Nitrobenzol, Diphenylguanidin, Trimethylolpropan-N,N'-m-phenylendimaleimid. Als Vernetzungshilfsmittel wird Trimethylolpropantrimethacrylat besonders bevorzugt. In einer vorteilhaften Ausführungsform werden Vernetzungshilfsmittel in einer Menge bis zu etwa 20 Gew.-%, vorzugsweise bis zu etwa 10 Gew.-%, und insbesondere von etwa 2 bis 6 Gew.-%, bezogen auf den Gehalt der Masse an unvernetzten Polyolefinen, eingesetzt. Vorzugsweise werden Antioxidantien, insbesondere Phenolderivate, Lactone, Phosphite und/oder sterisch gehinderte Amine, in einer Menge von bis zu 5, vorzugsweise bis zu 3,5, Gew.-%, insbesondere von 0,2 bis 2,5 Gew.-%, bezogen auf das Gewicht der Masse, einbezogen.

Wenn im Rahmen der Erfindung davon gesprochen wird, daß die erfindungsgemäß bestrahlte Folie in üblicher Weise erhalten wird, dann ist diese Information an sich für den angesprochenen Fachmann hinlänglich. Insbesondere kann es sich dabei um ein Extrusions-, Koextrusions- und Kalandrierverfahren sowie auch um das Blasformen handeln. Die Folienausbildung mit unvernetzten Komponenten hat insbesondere beim Extrusions- und Kalandrierverfahren den Vorteil, dass dieser Prozeßschritt gegenüber vorvernetzten Komponenten bei niedrigerer Temperatur und höherer Geschwindigkeit durchgeführt werden kann.

Die Vernetzung der Folie durch Behandlung mit Elektronenstrahlen erfolgt nach einem Prägevorgang. Dabei kann diese auch nach einem Lackiervorgang oder einem Kaschierprozess erfolgen. Das Bestrahlen kann dabei sowohl einseitig als auch beidseitig erfolgen. Bei einseitigem Bestrahlen kann sowohl die Sichtseite als auch die Rückseite bei der Vernetzung der Elektronenstrahlquelle zugewandt sein.

Die Dicke der nach dem erfindungsgemäßen Verfahren hergestellten Folien ist nicht kritisch, wobei eine Dicke von 0,2 bis 2,0, insbesondere von 0,4 bis 1,4 mm, besonders bevorzugt ist. Im Rahmen der Erfindung liegt die Dichte der Folie, wie sie nach dem Bestrahlen anfällt, bei einem Wert von 0,7 bis 1,2 $g/cm^3$, insbesondere in dem Bereich von 0,8 bis 1,0, vorzugsweise in dem Bereich von 0,85 bis 0,95 $g/cm^3$.

Die mechanischen Eigenschaften der erfindungsgemäß bestrahlten Folien können innerhalb gewisser Grenzen durch die bei der Vernetzung durch Elektronenstrahlen eingesetzte Strahlendosis gesteuert werden. Die Behandlung mit Elektronenstrahlen wird mit einer Strahlendosis von 30 bis 300 $kJ/m^2$ durchgeführt. Auch der Gelgehalt der Polyolefinfolien, der für die mechanischen Eigenschaften von großer Bedeutung ist, wird durch die eingesetzte Strahlendosis beeinflußt. Im Rahmen der vorliegenden Erfindung wurden die Gelgehalte nach der Extraktions-Methode bestimmt. Die Behandlung der Folie mit Elektronenstrahlen wird in einem solchen Ausmaß durchgeführt, daß sich ein Gelgehalt von 15 bis 65 % einstellt.

Die nach dem erfindungsgemäßen Verfahren hergestellte bestrahlte Polyolefinfolie zeichnet sich besonders durch ihre hohe Narbstabilität aus. Ein weiterer Vorzug der erfindungsgemäß hergestellten Polyolefinfolien besteht in der guten Laminierbarkeit so daß sie vorteilhaft zu Verbundgebilden laminiert werden können. Erfindungsgemäß wird die Polyolefinfolie oder das daraus hergestellte Verbundgebilde zu einem Formkörper tiefgezogen. Die Folie kann auch vor der Behandlung mit Elektronenstrahlen nach einem Laminierverfahren weiterverarbeitet werden.

Die nach dem erfindungsgemäßen Verfahren hergestellten Polyolefinfolien und die daraus erzeugten Verbundgebilde und Formkörper zeigen zahlreiche Vorteile. Insbesondere eigenen sich die erfindungsgemäß erhaltenen und zu Formkörpern umgebildeten Polyolefinfolien als Innenverkleidungen von Kraftfahrzeugen, insbesondere als Armaturenfolie, wobei die hohe Narbstabilität wichtig ist. Bedingt durch die lange Gebrauchsdauer von Kraftfahrzeugen sind gerade Armaturenfolien in Kraftfahrzeugen hohen Beanspruchungen ausgesetzt. Einem stabilen sauberen Narbbild kommt dabei für den Qualitätseindruck der Kraftfahrzeuginnenverkleidungen eine besondere Bedeutung zu. Vorteil liegt darin, daß das Nachvernetzten der Folien durch die Einstellung einer geeigneten Strahlendosis eine Beeinflussung der mechanischen Eigenschaften innerhalb gewisser Grenzen ermöglicht. Die erfindungsgemäß behandelten Polyolefinfolien weisen neben hoher Narbstabilität eine gute Prägbarkeit und Laminierbarkeit auf. So hat es sich gezeigt, daß bei der Weiterverarbeitung im Tiefziehverfahren besonders vorteilhafte Eigenschaften erhalten werden. Bei bekannten Verfahren werden nicht selten beim Tiefziehvorgang Bereiche der tiefgezogenen Folie in ihrer Homogenität gestört bzw.

sogar aufgerissen. Diese nachteiligen Erscheinungen werden erfindungsgemäß weitestgehend ausgeschlossen. Schließlich wird das Aufglänzen der Oberfläche erfindungsgemäß erhaltener Folien signifikant reduziert.

Die Erfindung soll nachfolgend anhand von Beispielen noch näher veranschaulicht werden:

**Beispiel 1** - Extrusion von Folien aus Massen mit einem Gehalt an Polyolefinen

Mischungen von Polyolefinen und weiteren Bestandteilen mit den in Tabelle 1 gezeigten Rezepturen wurden auf einem Zweiwellenextruder (ZSK 25 4D 28) zu Folien der Dicke 0,45 mm extrudiert. Zylinder- und Düsentemperaturen wurden dabei gemäß den Angaben der Tabelle 2 eingestellt.

Tabelle 1

| Zur Extrusion der Folien verwendete Rezepturen: | | | |
|---|---|---|---|
| | 1 | 2 | Vergleichsbeispiel |
| Thermoplastisches Elastomer (unvernetzt, Dichte 0,89 g/ml, MFI 1,0 g/10 min (230°C; 2,16 kg) | 80 | 80 | --- |
| Very low density Polyethylen, Dichte 0,88 g/ml, MFI 0,5 g/10 min (190°C; 2,16 kg) | 20 | 20 | 15 |
| Trimethylolpropantrimethacrylat | 2 | 2 | --- |
| Thermoplastisches Elastomer (vernetzt), Dichte 0,88 g/ml, MFI 10-15 g/10 min (230°C; 10 kg), Vernetzungsgrad 35% | | | 50 |
| Random Copolymeres PP, Dichte 0,90 g/ml, MFI 0,5 g/10 min (230°C; 2,16 kg) | | | 35 |
| Benzotriazol-Derivat (UV-Lichtschutzmittel) | 0,2 | 0,2 | 0,2 |
| Benzotriazol-Derivat (UV-Lichtschutzmittel) | 0,2 | 0,2 | 0,2 |
| Sterisch gehindertes Phenol (Antioxidationsmittel), Schmelzbereich 110-125°C | 0,1 | 0,3 | |
| Ruß (Pigment) | 3 | 3 | 3 |

Tabelle 2

| Zylinder- und Düsentemperaturen in °C bei der Extrusion der Folien | | | | | | |
|---|---|---|---|---|---|---|
| | Zone 1 | Zone 2 | Zone 3 | Zone 4 | Zone 5 | Zone 6 |
| Zylinder | 180 | 175 | 185 | 195 | 205 | --- |
| Düse | 210 | 210 | 210 | 210 | 210 | 210 |

Die extrudierten Folien wurden zu 82 cm langen Streifen geschnitten und hälftig mit einer Siliconnarbe verpreßt.

**Beispiel 2** - Bestrahlung der Folien aus Beispiel 1 mit Elektronenstrahlen und Tiefziehen über eine kleine Dachform

Die in Beispiel 1 hergestellten Folien wurden entweder unbehandelt oder nach Bestrahlen mit 30 kJ/m$^2$, 75 kJ/m$^2$ oder 150 kJ/m$^2$ einem Tiefziehvorgang über eine kleine Dachform unterzogen. Das Tiefziehen erfolgte bei einer Temperatur von 160°C. Anschließend wurden die so behandelten Folien hinsichtlich Ausformung, Narbung und Glanz bewertet. Tabelle 3 zeigt die Ergebnisse.

Tabelle 3

| | Rezeptur 1 (erfindungsgemäß) | Rezeptur 2 (erfindungsgemäß) | Rezeptur Vergleichsbeispiel* |
|---|---|---|---|
| | Tiefziehen über kleine Dachform bei 160°C / unbestrahlt | | |
| Ausformung | i.O. | i.O. | i.O. |
| Narbe | flach | flach | prägnant aufgezogene Narbung |
| Glanz | **stark glänzend | **stark glänzend, | matt |

(fortgesetzt)

| | Tiefziehen über kleine Dachform bei 160°C / 30·kJ/m$^2$ | | |
|---|---|---|---|
| Ausformung | i.O. | i.O. | |
| Narbe | prägnant aufgezogene Narbtäler | prägnant aufgezogene Narbtäler | |
| Glanz | **stark glänzend | **stark glänzend | |
| | Tiefziehen über kleine Dachform bei 160°C/ 75 kJ/m$^2$ | | |
| Ausformung | i.O. | i.O. | |
| Narbe | prägnant aufgezogene Narbtäler | prägnant aufgezogene Narbtäler | |
| Glanz | **stark glänzend | **stark glänzend | |
| | Tiefziehen über kleine Dachform bei 160°C /150 kJ/m$^2$ | | |
| Ausformung | i.O. | i.O. | |
| Narbe | prägnant Narbtäler nicht aufgezogen | prägnant Narbtäler nicht aufgezogen | |
| Glanz | matt | matt | |
| Anmerkungen : * bedeutet Vergleichsbeispiel mit Rezeptur gemäß Tabelle 1. ** bedeutet Vergleichsbeispiel mit Rezeptur 1 bzw. 2 gemäß Tabelle 1 | | | |

**Beispiel 3** - Bestimmung der Gelgehalte nach der Extraktions- Methode

Protokoll für die Bestimmung des Gelgehalts nach der Extraktionsmethode:

- Als Proben werden drei Folienstreifen von 1mm Dicke exakt ausgewogen (das Gewicht sollte etwa 0,0475 g betragen).
- Die Proben werden in Reagenzgläsern vorgelegt, in die dann Propfen aus rostfreiem Stahldraht gegegeben werden, um ein Aufschwimmen der Proben zu verhindern.
- Die Reagenzgläser werden bis zum oberen Rand mit Xylol befüllt und mit Folie verschlossen, um ein Verdampfen des Lösungsmittels zu verhindern. Darüber hinaus werden alle Reagenzgläser in eine Folienlage eingewickelt.
- Alle Proben werden für 24 Stunden in ein auf 120°C erhitztes Ölbad gestellt.
- Für jede Probe wird eine Siebtrommel exakt ausgewogen (die Siebkörper haben eine Maschezahl von 200 mesh und etwa das 10-fache Gewicht der Probe).
- Nach der 24-stündigen Inkubation im Ölbad wird der Xylolüberstand aus den Reagenzgläsern über die Siebtrommel filtriert, wobei das "Gel" in den Siebtrommel verbleibt.
- Anschließend werden die Siebtrommeln auf Metallplatten gestellt und für mindestens 5 Stunden bei 150°C im Vakuumofen getrocknet
- Nach dem 5-stündigen Trocknen im Vakuumofen läßt man die Siebtrommeln für etwa 10 min auf Raumtemperatur abkühlen.
- Anschließend werden die das Gel enthaltenden Siebtrommeln exakt ausgewogen.

Zur Bestimmung des Gelgehaltes werden folgende Formeln verwendet:

$$[\text{Gewicht (mit Gel beladene Siebtrommel)}] - [\text{Gewicht (Siebtrommel ohne Gel)}] =$$

$$[\text{Gewicht (Gel)}] \tag{1}$$

$$\frac{[\text{Gewicht (Gel)}]}{[\text{Gewicht (Probe)}]} \cdot 100 = [\text{Gelgehalt der Probe}] \tag{2}$$

Es wurden die in Tabelle 4 gezeigten Gelgehalte der mit unterschiedlichen Strahlendosen behandelten und über eine kleine Dachform tiefgezogenen Folien gemessen.

Tabelle 4

| | Rezeptur 1 | Rezeptur 2 | Rezeptur Vergleichsbeispiel* |
|---|---|---|---|
| | Tiefziehen über kleine Dachform bei 160°C /unbestrahlt | | |
| Gelgehalt Extraktions-Methode | ** 0 | ** 0 | 25 |
| | Tiefziehen über kleine Dachform bei 160°C /30 kJ/m$^2$ | | |
| Gelgehalt Extraktions-Methode | ** 1 | ** 5 | |
| | Tiefziehen über kleine Dachform bei 160°C / 75 kJ/m$^2$. | | |
| Gelgehalt Extraktions-Methode | ** 12 | 18 | |
| | Tiefziehen über kleine Dachform bei 160°C /150 kJ/m$^2$ | | |
| Gelgehalt Extraktions-Methode | 34 | 46 | |
| Anmerkungen: ph. Anmerkungen zu Tabelle 3 | | | |

**Patentansprüche**

1. Verfahren zur Herstellung eines genarbten Formkörpers mit einem Gehalt an partiell vernetzten Polyolefinen und gegebenenfalls weiteren Additiven, **dadurch gekennzeichnet, dass** aus unvernetzten Polyolefinen mit beigemischten Stabilisatoren und gegebenenfalls weiteren Additiven eine Folie hergestellt, diese Folie geprägt und die geprägte Folie zum Erzielen einer im Tiefziehprozess geeigneten Narbstabilität mit Elektronenstrahlen einer Strahlendosis von 30 bis 300 kJ/m$^2$ behandelt und die Strahlenbehandlung der geprägten Folie in einem solchen Ausmaß durchgeführt wird, dass sich in der bestrahlten, geprägten Folie ein Gelgehalt von 15 bis 65 Gew.-% einstellt, und die bestrahlte, geprägte Folie einer Dichte von 0,7 bis 1,2 g/cm$^3$ zu einem Formkörper mit genarbter Oberfläche tiefgezogen wird.

2. Verfahren nach Anspruch 1, **dadurch gekennzeichnet, dass** als unvernetzte Polyolefine Polypropylen, Polyethylen, Polypropylen-Copolymere oder -Terpolymere mit C$_2$, C$_4$-C$_{12}$-α-Olefinen und/oder Polyethylen-Copolymere oder -Terpolymere mit C$_3$ bis C$_{12}$-α-Olefinen verwendet werden.

3. Verfahren nach mindestens einem der Ansprüche 1 oder 2, **dadurch gekennzeichnet, dass** in die Folienmasse ein Vernetzungshilfsmittel gewählt wird.

4. Verfahren nach Anspruch 3, **dadurch gekennzeichnet, dass** als Vernetzungshilfsmittel Trimethylolpropantriacrylat eingesetzt wird.

5. Verfahren nach Anspruch 3 oder 4, **dadurch gekennzeichnet, dass** Trimethylolpropantriacrylat in einer Menge bis zu 20 Gew.-%, bezogen auf den Gehalt der Folienmasse an unvernetzten Polyolefinen, eingesetzt wird.

6. Verfahren nach einem der Ansprüche 1 bis 5, **dadurch gekennzeichnet, dass** als Stabilisatoren Phenolderivate, Lactone, Phosphite und/oder sterisch gehinderte Amine in einer Menge bis zu 5 Gew.-% in der Folienmasse eingesetzt werden.

7. Verfahren nach mindestens einem der Ansprüche 1 bis 6, **dadurch gekennzeichnet, dass** die bestrahlte Folie eine Dicke von 0,2 bis 2,0, insbesondere 0,4 bis 1,4 mm aufweist.

8. Verfahren nach mindestens einem der Ansprüche 1 bis 7, **dadurch gekennzeichnet, dass** die bestrahlte Folie zu einem Verbundgebilde laminiert wird.

9. Verfahren nach mindestens einem der Ansprüche 1 bis 8, **dadurch gekennzeichnet, dass** der erhaltene Formkörper als Innenverkleidungsteil von Kraftfahrzeugen, insbesondere als Armaturenfolie, verwendet wird.

10. Tiefgezogener genarbter Formkörper auf der Basis eines vernetzten Polyolefins mit beigemischten Stabilisatoren und gegebenenfalls weiteren Additiven und mit einer Dichte von 0,7 bis 1,2 g/cm$^3$, mit einem Gelgehalt von 15 bis 65 Gew.-%, mit guter Narbstabilität sowie mit matter Oberfläche, erhalten nach einem Verfahren gemäß mindestens einem der Ansprüche 1 bis 9.

**Claims**

1. Process for producing a grained article containing partially crosslinked polyolefins with or without further additives, **characterized in that** a foil is produced from uncrosslinked polyolefins with admixed stabilizers and with or without further additives, this foil is embossed and the embossed foil is treated with electron beams of a radiation dose in the range from 30 to 300 kJ/m$^2$ to obtain a grain stability suitable in deep drawing, the radiative treatment of the embossed foil being carried out to such an extent that a gel content of 15% to 65% by weight is established in the irradiated embossed foil, and the irradiated, embossed foil, which has a density in the range from 0.7 to 1.2 g/cm$^3$, is deep drawn to form an article having a grained surface.

2. Process according to Claim 1, **characterized in that** polypropylene, polyethylene, polypropylene copolymers or terpolymers with $C_2$, $C_4$-$C_{12}$-α-olefins and/or polyethylene copolymers or terpolymers with $C_3$ to $C_{12}$-α-olefins are used as uncrosslinked polyolefins.

3. Process according to either or both of Claims 1 and 2, **characterized in that** a crosslinking auxiliary is elected into the foil mass.

4. Process according to Claim 3, **characterized in that** trimethylolpropane triacrylate is used as crosslinking auxiliary.

5. Process according to Claim 3 or 4, **characterized in that** trimethylolpropane triacrylate is used in an amount of up to 20% by weight, based on the uncrosslinked polyolefin content of the foil mass.

6. Process according to any one of Claims 1 to 5, **characterized in that** phenol derivatives, lactones, phosphites and/or sterically hindered amines in an amount of up to 5% by weight are used as stabilizers in the foil mass.

7. Process according to at least one of Claims 1 to 6, **characterized in that** the irradiated foil has a thickness of 0.2 to 2.0 and more particularly 0.4 to 1.4 mm.

8. Process according to at least one of Claims 1 to 7, **characterized in that** the irradiated foil is laminated to form a composite structure.

9. Process according to at least one of Claims 1 to 8, **characterized in that** the article obtained is used as an interior trim component of motor vehicles, in particular as dashboard foil.

10. Deep-drawn grained article based on a crosslinked polyolefin with admixed stabilizers and with or without further additives and having a density of 0.7 to 1.2 g/cm$^3$, having a gel content of 15% to 65% by weight, having good grain stability and also having a matt surface, obtained by a process according to at least one of Claims 1 to 9.

**Revendications**

1. Procédé de préparation d'un corps façonné grenu présentant une teneur en polyoléfines partiellement réticulées et le cas échéant d'autres additifs, **caractérisé en ce qu'**on prépare, à partir de polyoléfines non réticulées dans lesquelles sont mélangés des stabilisateurs et le cas échéant d'autres additifs, une feuille, on gaufre cette feuille et on traite la feuille gaufrée, en vue d'obtenir une stabilité de la surface grenue appropriée dans un procédé d'emboutissage profond, avec des rayons électroniques à une dose de rayons de 30 à 300 kJ/m$^2$ et le traitement aux rayons de la feuille gaufrée est réalisé dans une mesure telle qu'il se règle, dans la feuille irradiée, grenue, une teneur en gel de 15 à 65% en poids et la feuille irradiée, gaufrée, d'un poids surfacique de 0,7 à 1,2 g/cm$^3$ est transformée par emboutissage profond en un corps façonné présentant une surface grenue.

2. Procédé selon la revendication 1, **caractérisé en ce qu'**on utilise comme polyoléfines non réticulées du polypropylène, du polyéthylène, des copolymères ou des terpolymères de polypropylène avec des α-oléfines en $C_2$, $C_4$-$C_{12}$ et/ou des copolymères ou des terpolymères de polyéthylène avec des α-oléfines en $C_3$ à $C_{12}$.

**3.** Procédé selon au moins l'une quelconque des revendications 1 ou 2, **caractérisé en ce qu'**on choisit un adjuvant de réticulation dans la masse de la feuille.

**4.** Procédé selon la revendication 3, **caractérisé en ce qu'**on utilise, comme adjuvant de réticulation, du triacrylate de triméthylolpropane.

**5.** Procédé selon la revendication 3 ou 4,
**caractérisé en ce qu'**on utilise le triacrylate de triméthylolpropane en une quantité allant jusqu'à 20% en poids, par rapport à la teneur de la masse de la feuille en polyoléfines non réticulées.

**6.** Procédé selon l'une quelconque des revendications 1 à 5, **caractérisé en ce qu'**on utilise comme stabilisateurs des dérivés du phénol, des lactones, des phosphites et/ou des amines stériquement encombrées en une quantité jusqu'à 5% en poids dans la masse de la feuille.

**7.** Procédé selon au moins l'une quelconque des revendications 1 à 6, **caractérisé en ce que** la feuille irradiée présente une épaisseur de 0,2 à 2,0, en particulier de 0,4 à 1,4 mm.

**8.** Procédé selon au moins l'une quelconque des revendications 1 à 7, **caractérisé en ce que** la feuille irradiée est laminée en une structure composite.

**9.** Procédé selon au moins l'une quelconque des revendications 1 à 8, **caractérisé en ce que** le corps façonné obtenu est utilisé comme partie de revêtement interne de véhicules, en particulier comme feuille d'armature.

**10.** Corps façonné grenu ayant subi un emboutissage profond à base d'une polyoléfine réticulée dans laquelle sont mélangés des stabilisateurs et le cas échéant d'autres additifs et présentant un poids surfacique de 0,7 à 1,2 g/cm$^3$, présentant une teneur en gel de 15 à 65% en poids, avec une bonne stabilité de la surface grenue ainsi qu'une surface mate, obtenu selon un procédé selon au moins l'une quelconque des revendications 1 à 9.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0425695 A